# EUROPÄISCHE PATENTSCHRIFT

(11) **EP 4 087 957 B1**
(45) Veröffentlichungstag und Bekanntmachung des Hinweises auf die Patenterteilung: **03.04.2024**
(21) Anmeldenummer: 21701393.7
(22) Anmeldetag: 08.01.2021
(51) Int. Cl.: C25B 15/02, C25B 1/04, C25B 9/23, H01M 8/0656

(54) **VERFAHREN ZUR ERZEUGUNG VON WASSERSTOFF UND SAUERSTOFF MITTELS EINES ELEKTROLYSEURS**
METHOD FOR PRODUCING HYDROGEN AND OXYGEN BY MEANS OF AN ELECTROLYSER
PROCÉDÉ DE PRODUCTION D'HYDROGÈNE ET D'OXYGÈNE AU MOYEN D'UN ÉLECTROLYSEUR

(30) Priorität: 10.01.2020 DE 102020200267; 05.01.2021 DE 102021200029
(43) Veröffentlichungstag der Anmeldung: 16.11.2022
(73) Patentinhaber: SMS Group GmbH, 40237 Düsseldorf (DE)
(72) Erfinder: GÖRTZ, Henry, 51467 Bergisch Gladbach (DE); PLATE, Frank, 40589 Düsseldorf (DE); TIMMERBEUL, Walter, 42281 Wuppertal (DE); GEERKENS, Christian, 41363 Jüchen (DE)
(74) Vertreter: Kross, Ulrich
(86) Internationale Anmeldenummer: PCT/EP2021/050295
(87) Internationale Veröffentlichungsnummer: WO 2021/140213

(56) Entgegenhaltungen:
- WO-A1-98/42893
- WO-A1-2006/105648
- WO-A1-2016/007983
- WO-A2-2010/084358

## Beschreibung

Die vorliegende Erfindung betrifft ein Verfahren zur Erzeugung von Wasserstoff und Sauerstoff mittels eines Elektrolyseurs sowie die Verwendung eines modulierten Stroms zur Erzeugung von Wasserstoff und Sauerstoff in einem Elektrolyseur.

Die Erzeugung von Wasserstoff, insbesondere durch elektrolytische Aufspaltung von Wasser, gewinnt im Zuge der Klimawandeldebatte und den Bestrebungen eine Klimaneutralität zu erreichen zunehmend an Bedeutung.

Für die Erzeugung von Wasserstoff bzw. für die Produktion von sog. EcoFuels werden typischerweise Elektrolyseure verwendet, wie beispielsweise PEM-Elektrolyseure, die mittels Gleichstroms betrieben werden, wobei hierbei die Thyristortechnik angewendet wird.

Nachteilig ist hierbei der relativ geringe Wirkungsgrad bei den aus dem Stand der Technik bekannten Verfahren.

Aus der WO 98/42893 A1 ist ein Generatorsystem für ultrareines Gas und ein Verfahren, das eine Gleichstromquelle verwendet, um einer Kathode in einer Elektrolysezelle einen proportionalen elektrischen Strom zuzuführen, bekannt.

Aus der WO 2006/105648 A1 ist ein Verfahren bekannt, bei dem die Effektivspannung mittels eines Pulsweitenmodulators verändert wird.

Aus der WO 2010/084358 A1 ist eine Elektrolysevorrichtung zum Erzeugen von Wasserstoff und Sauerstoff bekannt.

Ferner ist aus der WO 2016/007983 A1 eine Elektrolysezelle sowie ein Verfahren zur Herstellung von Wasserstoff bekannt.

Der vorliegenden Erfindung liegt daher die Aufgabe zugrunde, ein Verfahren zur Erzeugung von Wasserstoff und Sauerstoff bereitzustellen, mit dem die Ausbeute an Wasserstoff und Sauerstoff im Verhältnis zur eingebrachten elektrischen Energie verbessert werden kann.

Erfindungsgemäß wird die Aufgabe durch ein Verfahren mit den Merkmalen des Patentanspruchs 1 gelöst.

Gemäß dem Verfahren zur Erzeugung von Wasserstoff und Sauerstoff mittels eines Elektrolyseurs, der zumindest einen Anodenraum mit einer Anode und zumindest einen Kathodenraum mit einer Kathode umfasst, ist vorgesehen, dass die zumindest eine Anode sowie die zumindest eine Kathode mittels eines modulierten Stroms bestromt werden und die Erzeugung von Wasserstoff und Sauerstoff innerhalb des Elektrolyseurs unter Anwendung einer definierten Pulsmustersequenz erfolgt, die aus zumindest einem Pulsmuster gebildet wird.

Die Pulsmustersequenz kann dabei aus einem einzigen Pulsmuster und/oder aus einer Kombination von zumindest zwei oder einer Mehrzahl von unterschiedlichen Pulsmustern einer Pulsmusterbibliothek gebildet werden.

In gleicher Weise sieht die vorliegende Erfindung die Verwendung eines modulierten Stroms zur Erzeugung von Wasserstoff und Sauerstoff in einem Elektrolyseur unter Anwendung einer definierten Pulsmustersequenz, die aus zumindest einem Pulsmuster gebildet wird, vor.

Erfindungsgemäß wird der Elektrolyseur mit einem modulierten Strom betrieben. Hierbei hat sich überraschenderweise gezeigt, dass die Wasserstoffausbeute im Verhältnis zur eingesetzten elektrischen Leistung höher ist als bei der konventionellen Gleichstrom-Elektrolyse. Durch die Anwendung einer definierten Pulsmustersequenz, die aus zumindest einem Pulsmuster gebildet wird, kann somit der Wirkungsgrad eines Elektrolyseurs signifikant verbessert werden.

Eine wissenschaftlich nachvollziehbare Erklärung dieses Effektes ist bisher nicht bekannt. Die Erfinder gehen aber derzeit davon aus, dass dieser Effekt auf der Aufspaltung der so genannten Nernst'schen Diffusionsschicht basieren könnte.

Ein derart erzeugter Wasserstoff kann in einem weiteren Prozessschritt, beispielsweise durch das Fischer-Tropsch-Verfahren, zu synthetischen Kraftstoffen umgewandelt werden.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Vorteilhafterweise wird der modulierte Strom von zumindest einem Pulsgleichrichter bereitgestellt, dessen Minuspol mit der zumindest einen Kathode und der Pluspol mit der zumindest einen Anode des Elektrolyseurs elektrisch verbunden ist. Der Einsatz eines Pulsgleichrichters erlaubt die Möglichkeit den Betrag sowie den zeitlichen Verlauf des jeweiligen gewünschten Pulsmusters und somit der gesamten Pulsmustersequenz zu definieren, so dass der Erzeugungsprozess entsprechend der vorgegebenen Parameter optimal angepasst werden kann.

Der modulierte Strom kann vorteilhafterweise von einem Pulsgleichrichter bereitgestellt werden, der in Schaltnetzteiltechnik ausgeführt ist. Ein derart ausgebildeter Pulsgleichrichter definiert sich dadurch, dass die netzseitige Wechselspannung zunächst gleichgerichtet und geglättet wird. Die sodann generierte Gleichspannung, die wesentlich höheren Frequenzen, in der Regel im Bereich von 5 kHz bis 300 kHz, aufweist, wird sodann aufgeteilt, mit dieser hohen Frequenz transformiert und anschließend gleichgerichtet und gesiebt. Die überlagerte Spannungs- und Stromregelung funktioniert in der Regel über eine Pulsbreitenmodulation oder Pulsphasenmodulation.

Durch die hohe Frequenz am Leistungsüberträger ist der Transformator wesentlich kleiner ausgebildet, so dass die Energieverluste wesentlich geringer sind. Daraus ergibt sich systembedingt eine wesentlich höhere Leistungseffektivität der Gleichstromversorgung.

Bauartbedingt kann der Pulsgleichrichter in Modulbauweise bereitgestellt werden. Dies führt zu einer wesentlich höheren Verfügbarkeit, da die bereitzustellende Leistung eines defekten Moduls durch ein anderes Modul übernommen und bei der Reparatur eines defekten Moduls dieses schnell ausgetauscht werden kann.

Ein weiterer Vorteil besteht darin, dass die Qualität des Gleichstroms, insbesondere seine geringere Restwelligkeit, bei geringeren Verlusten wesentlich besser ist, als bei der herkömmlichen thyristorbasierten DC-Elektrolyse, die Reparatur von defekten Geräten wesentlich schneller und einfacher realisierbar ist, und bestehende Gleichstrom-/Gleichspannungsversorgungssysteme durch weitere Module nachträglich durch Verwendung entsprechender Regelungstechnik, mittels derer die Leistung des Gleichstrom-/Gleichspannungsversorgungssystems erhöht werden kann, erweiterbar sind.

Ferner bieten die eingesetzten Pulsgleichrichter oder andere geeignete Spannungsquellen, wie IGBT (Insulated Gate Bipolar Transistor), anders als netzgebundene Thyristorgeräte, bei entsprechender Konstruktion die Möglichkeit die Elektrolyseure, insbesondere wenn diese zu Batterien verschaltet sind, vor zu heizen und während eines stationären Betriebes, in einem Gleichrichterarbeitspunkt kleiner 100 %, einen entsprechend guten Wirkungsgrad zur Verfügung zu stellen. Dies führt bei einem gleichen Wirkungsgrad der Gleichspannungsversorgung zu einer Erhöhung des Wirkungsgrades des Gesamt-Wasserstofferzeugungssystems.

In einer vorteilhaften Ausführungsvariante ist vorgesehen, dass der zumindest eine Pulsgleichrichter mit einer zentralen Steuereinheit elektrisch verbunden ist, über die der Erzeugungsprozess gesteuert und/oder geregelt wird. Hierbei ist besonders bevorzugt vorgesehen, dass das zumindest eine Pulsmuster der Pulsmustersequenz von der zentralen Steuereinheit an den zumindest einen Pulsgleichrichter übertragen wird.

Hierzu ist erfindungsgemäß vorgesehen, dass der Erzeugungsprozess unter Anwendung einer definierten Pulsmustersequenz erfolgt, die aus einzelnen Pulsmustern gebildet wird. Die Pulsmustersequenz kann dabei aus einem einzigen Pulsmuster und/oder aus einer Kombination von zumindest zwei oder einer Mehrzahl von gleichen und/oder unterschiedlichen Pulsmustern einer Pulsmustersammlung gebildet werden.

Für gewöhnlich umfasst das Pulsmuster der Pulsmustersequenz zumindest einen über eine Pulsdauer definierten kathodischen Puls und zumindest eine Pulsauszeit, wobei der kathodische Puls über eine Pulsdauer und seine jeweilige Form, beispielsweise rechteckförmig, definiert wird.

Die Pulsdauer des kathodischen Pulses kann vorteilhafterweise 200 µs bis 500 ms betragen. Die kleinste Pulsdauer ist aus technischen Gründen auf 200 µs limitiert. Daher ist vorzugsweise vorgesehen, dass die kleinste Pulsdauer 200 µs, bevorzugt 500 µs, mehr bevorzugt 1000 µs, noch mehr bevorzugt 2000 µs, und am meisten bevorzugt 5000 µs beträgt.

Die Pulsdauer sollte aber auch eine Zeit von 500 ms nicht überschreiten. Die maximale Pulsdauer beträgt daher vorzugsweise 500 ms, bevorzugt 250 ms, mehr bevorzugt 100 ms, noch mehr bevorzugt 50 ms und am meisten bevorzugt 10 ms.

Ein besonders bevorzugter Bereich der Pulsdauer beträgt 200 µs bis 1000 µs, ganz besonders bevorzugt 200 µs bis 700 µs.

Die Pulsauszeit, also der Zeitraum zwischen zwei aufeinanderfolgenden kathodischen Pulsen, kann vorzugsweise im Bereich des 0.01-fachen bis 10-fachen des kathodischen Pulses, bevorzugt im Bereich des 0.1-fachen bis 5-fachen des kathodischen Pulses, mehr bevorzugt im Bereich des 1-fachen bis 4-fachen des kathodischen Pulses, noch mehr bevorzugt im Bereich des 2-fachen bis 3.50-fachen des kathodischen Pulses, und am meisten bevorzugt dem 5-fachen des kathodischen Pulses betragen.

Die Pulsauszeit kann vorliegend ohne Strom oder bei einem Haltestrom durchgeführt werden. Mit anderen Worten wird dem Elektrolyseur gemäß einer ersten vorteilhaften Ausführungsvariante kurzzeitig kein Strom zugeführt, so dass die Stromstärke I den Wert null annimmt (I_{A} = 0). In einer weiteren Ausführungsvariante kann die Pulsauszeit bei einem Haltestrom durchgeführt werden. Hierbei wird der Strom zwischen zwei kathodischen Pulsen um einen spezifischen Betrag reduziert. Dieser Betrag kann vorteilhafterweise bis zu 5/6, bevorzugt bis zu 4/5, mehr bevorzugt bis zu 3/4, noch mehr bevorzugt bis zu 2/3 des Stromes des vorhergehenden kathodischen Pulses betragen.

Der Elektrolyseur kann als Membran-basierter Elektrolyseur ausgebildet sein, wie beispielsweise ein Proton Exchange Membrane-Elektrolyseur, ein Nafiomembrane-Elektrolyseur, ein Polymer Electrolyte Membrane-Elektrolyseur oder ein Proton Exchange Membrane Fuel Cell-Elektroyseur.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1: eines Elektrolyseurs zur Erzeugung von Wasserstoff und Sauerstoff in einer schematischen Darstellung,
- Fig. 2: eine erste Ausführungsvariante eines Pulsmusters, das einen Teil der Pulsmustersequenz bilden kann,
- Fig. 3: eine zweite Ausführungsvariante eines Pulsmusters, das einen Teil der Pulsmustersequenz bilden kann,
- Fig. 4: eine dritte Ausführungsvariante eines Pulsmusters, das einen Teil der Pulsmustersequenz bilden kann, und
- Fig. 5: eine vierte Ausführungsvariante eines Pulsmusters, das einen Teil der Pulsmustersequenz bilden kann.

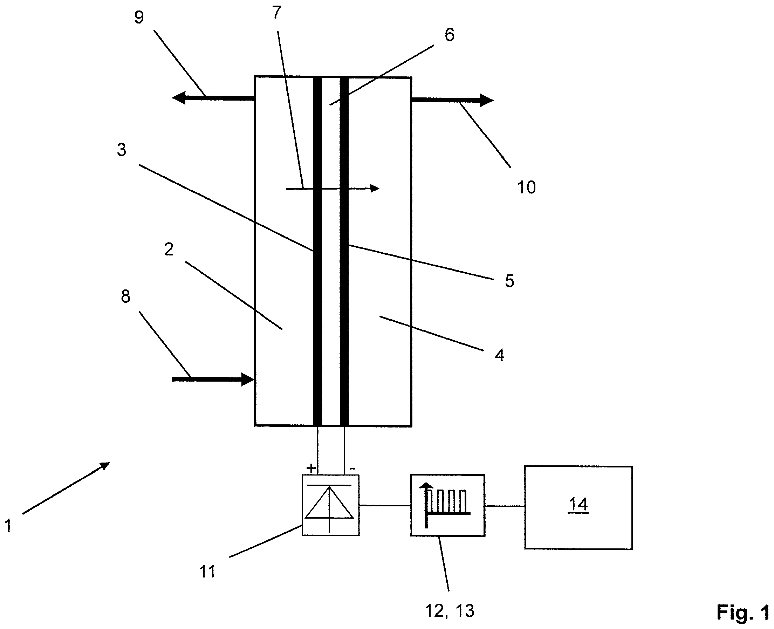

In Figur 1 ist ein aus dem Stand der Technik bekannter Aufbau eines Elektrolyseurs 1 zur Erzeugung von Wasserstoff und Sauerstoff gezeigt, mit dem Wasser in die beiden Produkte elektrolytisch aufgespalten werden kann. Der vorliegend gezeigte Elektrolyseur 1 ist als PEM-Elektrolyseur ausgebildet und umfasst einen Anodenraum 2 mit einer Anode 3 und einen Kathodenraum 4 mit einer Kathode 5. Zwischen den beiden Elektroden 3, 5 ist eine semipermeable Membran 6 angeordnet, die für Protonen durchlässig ist, wie dies anhand des Pfeils 7 symbolisiert wird.

Der Anodenraum 2 umfasst einen Wasserzulauf 8, über den, vorzugsweise kontinuierlich, Wasser bzw. ein Elektrolyt in den Anodenraum 2 eingeleitet wird, und eine Austrittsöffnung 9, über die der erzeugte Sauerstoff entnommen werden kann. Wie der Darstellung in Figur 1 weiter zu entnehmen, umfasst auch der Kathodenraum 4 eine Austrittsöffnung 10, über die sodann der in dem Elektrolyseur 1 erzeugte Wasserstoff entnommen werden kann.

Zur Durchführung des Erzeugungsprozesses werden die Anode 3 sowie die Kathode 5 mittels eines modulierten Stroms bestromt, der von einem Pulsgleichrichter 11, der in Schaltnetzteiltechnik ausgeführt sein kann, bereitgestellt wird. Der Pulsgleichrichter 11 ist über seinen Minuspol mit der Kathode 5 und der Pluspol mit der Anode 3 elektrisch verbunden. Über den modulierten Strom sind die beiden Elektroden 3, 5 derart bestrombar, dass der Prozess unter Anwendung einer definierten Pulsmustersequenz 12, die aus einzelnen Pulsmustern 13 gebildet wird, durchführbar ist.

Vorteilhafterweise ist der Pulsgleichrichter 11 mit einer zentralen Steuereinheit 14 elektrisch verbunden ist, über die das jeweilige gewünschte Pulsmuster 13 der Pulsmustersequenz 12 an diesen übertragbar ist.

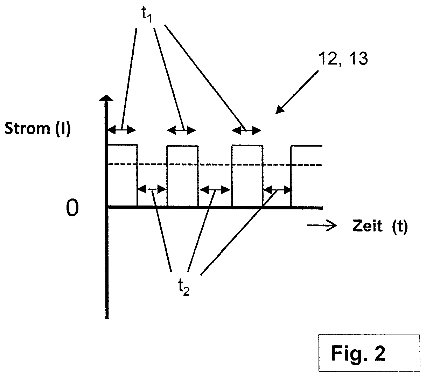

In den Figuren 2 bis 5 sind unterschiedliche Ausführungsvarianten von Pulsmustern 13 gezeigt, die einen Teil der Pulsmustersequenz 12 bilden, gemäß dieser der vorliegende Erzeugungsprozess durchführbar ist.

In Figur 2 ist eine Ausführungsvariante eines Pulsmusters 12 dargestellt, das ein sich in Strombetrag (I) und Zeit (t) gleichartig ausgestaltetes, sich wiederholendes Pulsmuster 12 zeigt. Das Pulsmuster 12 zeigt mehrere hintereinander angeordnete kathodische, rechteckförmige, Pulse mit einer Pulsdauer (t₁), die jeweils die gleiche Stromstärke (I) aufweisen. Die einzelnen Pulse sind innerhalb des Pulsmusters 12 über eine Pulsauszeit (t₂) voneinander getrennt angeordnet, wobei t₂ = t₁ ist.

Im Unterschied hierzu ist mit der gestrichelten Linie in den Figuren 2 bis 5 ein zeitlich konstanter, kathodischer Strom, wie er in der konventionellen Gleichstromelektrolyse (DC-Elektrolyse) angewendet wird, dargestellt.

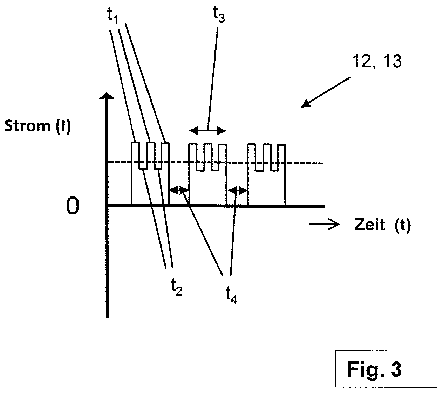

In Figur 3 ist eine Ausführungsvariante eines Pulsmusters 12 gezeigt, das ebenfalls ein sich in Strombetrag und Zeit gleichartig ausgestaltetes, sich wiederholendes Pulsmuster 12 zeigt. Das Pulsmuster 12 zeigt mehrere hintereinander angeordnete kathodische, kronenartig ausgebildete, Pulse mit einer Pulsdauer (t₃), die jeweils voneinander durch eine Pulsauszeit (t₄) getrennt angeordnet sind, wobei t₄ =1/2 t₁ ist. Jeder der kronenartig ausgebildeten Pulse weist drei Teilpulse mit jeweils gleicher Pulsdauer (t₁) sowie gleicher Stromstärke (I) auf. Wie anhand des Pulsmusters 12 erkennbar, sind die einzelnen Teilpulse durch eine Pulsauszeit (t₂) voneinander getrennt, die einen Haltestrom in Höhe von 2/3 der Stromstärke des Teilpulses aufweist. Die Pulsdauer (t₁) sowie die Pulsauszeit (t₂) sind hierbei gleich lang (t₂ = t₁).

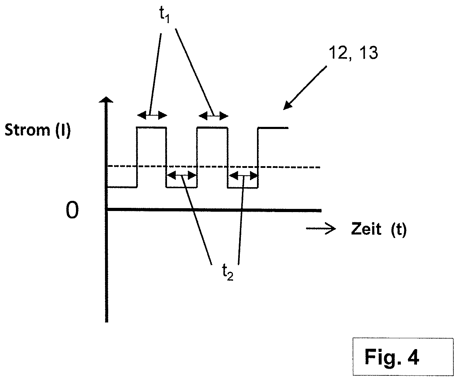

In Figur 4 ist ein weiteres Pulsmuster 12 gezeigt, das ein sich in Strombetrag und Zeit gleichartig ausgestaltetes, sich wiederholendes Pulsmuster 12 aufweist. Das Pulsmuster 12 zeigt mehrere hintereinander angeordnete kathodische, rechteckförmige, Pulse mit einer Pulsdauer (t₁), die jeweils die gleiche Stromstärke (I) aufweisen. Die einzelnen Pulse sind innerhalb des Pulsmusters 12 über eine Pulsauszeit (t₂) voneinander getrennt angeordnet, wobei t₂ = t₁ ist. Der Haltestrom der Pulsauszeit (t₂) beträgt vorliegend 1/4 der Stromstärke des Pulses.

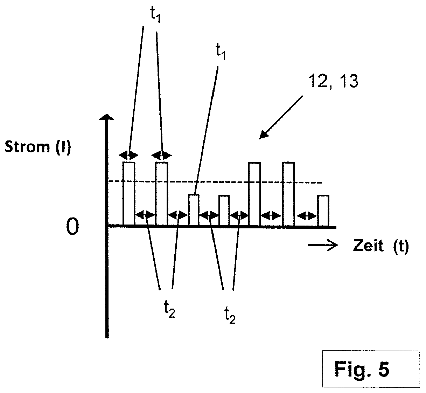

Figur 5 zeigt eine weitere Ausführungsvariante eines Pulsmusters 12. Das Pulsmuster 12 zeigt eine alternierende Abfolge von kathodischen, rechteckförmigen Pulsen unterschiedlicher Stromstärke. Die ersten zwei Pulse weisen jeweils eine gleiche Pulsdauer (t₁) sowie die gleiche Stromstärke (I) auf. Die zwei nachfolgenden Pulse sind im Strombetrag um die Hälfte reduziert (I₂ = 1/2 I₁). Sämtliche Pulse sind durch eine Pulsauszeit (t₂) voneinander getrennt, wobei für diese gilt t₂ = 2 t₁.

Beispiele:
Es wurde ein PEM-Elektrolyseur verwendet, wie er vom Grundprinzip in Figur 1 gezeigt ist. Als Elektrolyt wurde eine wässrige NaOH-Lösung verwendet. Der Elektrolyseur wurde mit einer Stromstärke von 0.5 A/cm² und bei einer Zellspannung von ca. 2 V betrieben.

In einem Vergleichsbeispiel wurde zunächst mittels konventioneller Gleichstromelektrolyse Wasser in Sauerstoff und Wasserstoff zersetzt, wobei ein Wasserstoff-Volumen von 50 mL/min detektiert werden konnte.

In dem erfindungsgemäßen Beispiel wurde der Elektrolyseur mit einem modulierten Strom bestromt, wobei eine Pulsmustersequenz verwendet wurde, die aus dem in Figur 2 gezeigten Pulsmuster bestand. Hierbei konnte ein Wasserstoff-Volumen von 60 mL/min bei gleicher eingesetzter elektrischer Leistung detektiert werden.

### Bezugszeichenliste

- 1: Elektrolyseur
- 2: Anodenraum
- 3: Anode
- 4: Kathodenraum
- 5: Kathode
- 6: Membran
- 7: Pfeil / Protonentransportrichtung
- 8: Wasserzulauf
- 9: Austrittsöffnung Sauerstoff
- 10: Austrittöffnung Wasserstoff
- 11: Pulsgleichrichter
- 12: Pulsmustersequenz
- 13: Pulsmuster
- 14: Steuereinheit

## Patentansprüche

1. Verfahren zur Erzeugung von Wasserstoff und Sauerstoff mittels eines Elektrolyseurs (1), der zumindest einen Anodenraum (2) mit einer Anode (3) und zumindest einen Kathodenraum (4) mit einer Kathode (5) umfasst, wobei die zumindest eine Anode (3) sowie die zumindest eine Kathode (5) mittels eines modulierten Stroms bestromt werden und die Erzeugung von Wasserstoff und Sauerstoff innerhalb des Elektrolyseurs (1) unter Anwendung einer definierten Pulsmustersequenz (12) erfolgt, die aus zumindest einem Pulsmuster (13) gebildet wird.

2. Verfahren nach Anspruch 1, wobei der modulierte Strom von zumindest einem Pulsgleichrichter (11) bereitgestellt wird, dessen Minuspol mit der zumindest einen Kathode (5) und der Pluspol mit der zumindest einen Anode (3) elektrisch verbunden ist.

3. Verfahren nach Anspruch 2, wobei der zumindest eine Pulsgleichrichter (11) mit einer zentralen Steuereinheit (14) elektrisch verbunden ist, über die der Erzeugungsprozess gesteuert und/oder geregelt wird.

4. Verfahren Anspruch 3, wobei das zumindest eine Pulsmuster (13) der Pulsmustersequenz (12) von der zentralen Steuereinheit (14) an den zumindest einen Pulsgleichrichter (11) übertragen wird.

5. Verfahren nach einem der vorhergehenden Ansprüche, wobei das zumindest eine Pulsmuster (13) der Pulsmustersequenz (12) zumindest einen über eine Pulsdauer definierten kathodischen Puls und zumindest eine Pulsauszeit umfasst.

6. Verfahren nach Anspruch 5, wobei die Pulsdauer des kathodischen Pulses 200 µs bis 500 ms beträgt.

7. Verfahren nach Anspruch 5 oder 6, wobei eine Pulsauszeit zwischen zwei aufeinanderfolgenden kathodischen Pulsen im Bereich des 0.01-fachen bis 10-fachen des kathodischen Pulses beträgt.

8. Verfahren nach einem der vorhergehenden Ansprüche, wobei der Elektrolyseur (1) als Membran-basierter Elektrolyseur ausgebildet ist.

## Claims

1. Method for producing hydrogen and oxygen by means of an electrolyser (1), which comprises at least one anode chamber (2) with an anode (3) and at least one cathode chamber (4) with a cathode (5), wherein the at least one anode (3) and the at least one cathode (5) are energised by means of a modulated current and the production of hydrogen and oxygen is carried out within the electrolyser (1) with use of a defined pulse pattern sequence (12) consisting of at least one pulse pattern (13).

2. Method according to claim 1, wherein the modulated current of at least one pulse rectifier (11) is provided, the negative pole of which is electrically connected with the at least one cathode (5) and the positive pole with the at least one anode (3).

3. Method according to claim 2, wherein the at least one pulse rectifier (11) is electrically connected with a central control unit (14), by way of which the production process is controlled and/or regulated.

4. Method according to claim 3, wherein the at least one pulse pattern (13) of the pulse pattern sequence (12) is transferred from the central control unit (14) to the at least one pulse rectifier (11).

5. Method according to any one of the preceding claims, wherein the at least one pulse pattern (13) of the pulse pattern sequence (12) comprises at least one cathodic pulse, which is defined by way of a pulse duration, and at least one pulse off time.

6. Method according to claim 5, wherein the pulse duration of the cathodic pulse is 200 µs to 500 ms.

7. Method according to claim 5 or 6, wherein a pulse off time between two successive cathodic pulses is in the range of 0.01 times to 10 times the cathodic pulse.

8. Method according to any one of the preceding claims, wherein the electrolyser (1) is constructed as a membrane-based electrolyser.

## Revendications

1. Procédé de production d'hydrogène et d'oxygène au moyen d'un électrolyseur (1), qui comprend au moins un compartiment anodique (2) avec une anode (3) et au moins un compartiment cathodique (4) avec une cathode (5), l'au moins une anode (3) et l'au moins une cathode (5) étant alimentées au moyen d'un courant modulé et la génération d'hydrogène et d'oxygène ayant lieu au sein de l'électrolyseur (1) à l'aide d'une séquence de motifs d'impulsions (12) définie, qui est formée à partir d'au moins un motif d'impulsion (13).

2. Procédé selon la revendication 1, dans lequel le courant modulé est fourni par au moins un redresseur d'impulsions (11), dont le pôle négatif est relié électriquement à l'au moins une cathode (5) et dont le pôle positif est relié électriquement à l'au moins une anode (3).

3. Procédé selon la revendication 2, dans lequel l'au moins un redresseur d'impulsions (11) est relié électriquement à une unité de commande centrale (14), par l'intermédiaire de laquelle le processus de génération est contrôlé et/ou régulé.

4. Procédé selon la revendication 3, dans lequel l'au moins un motif d'impulsion (13) de la séquence de motifs d'impulsions (12) est transmis par l'unité de commande centrale (14) à l'au moins un redresseur d'impulsions (11).

5. Procédé selon l'une des revendications précédentes, dans lequel l'au moins un motif d'impulsion (13) de la séquence de motifs d'impulsions (12) comprend au moins une impulsion cathodique définie par une durée d'impulsion et au moins un temps de coupure d'impulsion.

6. Procédé selon la revendication 5, dans lequel la durée d'impulsion de l'impulsion cathodique est de 200 µs à 500 ms.

7. Procédé selon la revendication 5 ou 6, dans lequel un temps de coupure d'impulsion entre deux impulsions cathodiques successives est compris dans la plage de 0,01 fois à 10 fois l'impulsion cathodique.

8. Procédé selon l'une des revendications précédentes, dans lequel l'électrolyseur (1) est conçu comme un électrolyseur à membrane.
